# EUROPEAN PATENT APPLICATION

(11) **EP 4 672 364 A1**
(43) Date of publication of application: **31.12.2025**
(21) Application number: 23937176.8
(22) Date of filing: 30.08.2023
(51) Int. Cl.: H01M 4/36, H01M 4/485, H01M 4/525

(54) **SODIUM LAYERED METAL OXIDE AND PREPARATION METHOD THEREFOR, SECONDARY BATTERY AND ELECTRIC DEVICE**

(30) Priority: 15.05.2023 CN 202310541146
(71) Applicant: Contemporary Amperex Technology Co., Limited, Ningde, Fujian 352100 (CN)
(72) Inventor: WANG, Zhiqiang, Ningde, Fujian 352100 (CN); XU, Bo, Ningde, Fujian 352100 (CN); OUYANG, Chuying, Ningde, Fujian 352100 (CN); ZHAO, Xushan, Ningde, Fujian 352100 (CN); HU, Xingkai, Ningde, Fujian 352100 (CN)
(74) Representative: Jacob, Reuben Ellis
(86) International application number: PCT/CN2023/115723
(87) International publication number: WO 2024/234500

(57) **Abstract**

Disclosed in the present application are a sodium layered metal oxide and a preparation method therefor, a secondary battery and an electric device. A chemical general formula of the sodium layered metal oxide is Na₁₋ₓAₓC_{y}M_{1-y}O₂, wherein M comprises a transition metal element; A comprises at least one of IIA group elements, V group metal elements, VIA group metal elements and IIIB group elements, and the ion radius of A is larger than that of M; C comprises at least one of a third-period metal element, a fourth-period metal element and a fifth-period metal element, and the valence of C is lower than or equal to that of M; and x=0.001-0.150, and y=0.001-0.500. By doping A and C into the sodium layered metal oxide, layer slippage and phase change are not prone to occurring on the sodium layered metal oxide in a sodium removal state, such that the sodium layered metal oxide has very good stability, the cycle performance can be improved, and the service life can be prolonged.

## Description

This application claims priority to Chinese Patent Application No. 202310541146.6, filed on May 15, 2023, entitled "SODIUM LAYERED METAL OXIDE AND PREPARATION METHOD THEREOF, SECONDARY BATTERY, AND ELECTRIC APPARATUS," which are incorporated herein by reference in its entirety.

### TECHNICAL FIELD

This application pertains to the technical field of battery materials, specifically relating to a sodium layered metal oxide and a preparation method thereof, a secondary battery, and an electric apparatus.

### BACKGROUND

Sodium-ion batteries offer advantages such as abundant sodium reserves on Earth, low cost, and unique battery safety characteristics, making them significant candidates for large-scale energy storage systems. Sodium layered metal oxides can be represented by NaMO₂, where M is a transition metal element. Sodium layered metal oxides exhibit characteristics such as high specific capacity, high compacted density, and adjustable voltage range, enabling their use as positive electrode materials for sodium-ion batteries.

However, sodium layered metal oxides suffer from structural instability. During the cyclic charging and discharging of sodium-ion batteries, sodium layered metal oxides used as positive electrode materials are prone to phase transitions, which adversely affect their cycle life.

### SUMMARY

In view of the aforementioned issues, this application provides a sodium layered metal oxide and a preparation method thereof, a secondary battery, and an electric apparatus, aiming to address the technical problem of structural instability in sodium layered metal oxides.

According to a first aspect, an embodiment of this application provides a sodium layered metal oxide, where the sodium layered metal oxide has a general chemical formula of: Na₁₋ₓAₓC_{y}M_{1-y}O₂; where
M includes a transition metal element;
A includes at least one of a Group IIA element, a Group V metal element, a Group VIA metal element, and a Group IIIB element, an ionic radius of A being greater than an ionic radius of M;
C includes at least one of a third-period metal element, a fourth-period metal element, and a fifth-period metal element, a valence of C being less than or equal to a valence of M; and
x=0.001 to 0.150 and y=0.001 to 0.500.

By incorporating specific types of A elements and C elements into the sodium layered metal oxide, where the ionic radius of A is larger than that of the transition metal M and the valence of A is higher than that of sodium ions, the strong Coulombic interaction between the high-valence A element and oxygen atoms reduces the likelihood of layer sliding of the sodium layered metal oxide in the desodiated state, thereby suppressing phase transitions and supporting the layered structure. Additionally, the element C, with a lower valence than the transition metal M, effectively balances the valence state, mitigating lattice stress increases caused by local valence changes. Therefore, the sodium layered metal oxide provided by the embodiment of this application, doped with types of A and C elements, exhibits excellent stability, enhancing its cycle performance and service life.

In an embodiment, A is a doping element at the sodium site, and C is a doping element for M.

By doping A at the sodium site and C at the M site, a stable dual-site-doped sodium layered metal oxide is formed.

In some embodiments, a valence of A ranges from +2 to +4.

After doping with A having a valence of +2 to +4 in the sodium layered metal oxide, compared to sodium ions with a valence of +1, the strong Coulombic interaction between the doping element A and oxygen atoms makes layer sliding less likely in the desodiated state, providing an effective structural pillar role, thereby improving the crystal structure stability of the sodium layered metal oxide.

In some embodiments, in A, the Group IIA element includes at least one of calcium, strontium, and barium; the Group V metal element includes at least one of antimony and bismuth; the Group VIA metal element includes tellurium; and the Group IIIB element includes at least one of yttrium, cerium, and lanthanum; or, A includes calcium.

The ionic radii of calcium, strontium, barium, antimony, bismuth, yttrium, cerium, lanthanum, and tellurium are close to or slightly larger than that of sodium ions, and their valences are higher than that of sodium ions. Therefore, using these doping elements at the sodium site of the sodium layered metal oxide, combined with the strong Coulombic interaction with oxygen atoms, effectively suppresses interlayer sliding of the sodium layered metal oxide. Calcium, in particular, not only facilitates doping at the sodium site but also enhances the crystal structure stability of the sodium layered metal oxide.

In some embodiments, in C, the third-period metal element includes at least one of magnesium and aluminum; the fourth-period metal element includes at least one of zinc, gallium, and germanium; and the fifth-period metal element includes zirconium; or, C includes aluminum.

The ionic radii of zirconium, magnesium, aluminum, zinc, gallium, and germanium are close to or smaller than that of the transition metal M, and their valences are less than or equal to that of the transition metal M. Thus, these elements can be easily doped at the transition metal M site while balancing the valence state, reducing the risk of increased lattice stress due to significant local valence changes. Aluminum, in particular, not only facilitates doping at the transition metal M site but also effectively balances the valence state.

In some embodiments, M includes at least two of nickel, manganese, copper, and iron; or, M includes nickel, iron, and manganese.

Sodium layered metal oxides formed with multiple transition metals such as nickel, manganese, copper, and iron reduce the migration of transition metal ions in the transition metal layer. Combined with the C doping element at the sodium site, this configuration better suppresses phase transitions, enhancing electrochemical stability in the desodiated state. Sodium layered metal oxides formed with nickel, iron, and manganese as the transition metal elements at the M site not only exhibit high specific capacity but also facilitate doping with the C element.

In an embodiment, a molar ratio of nickel, iron, and manganese in M is (0.2 to 0.4):(0.2 to 0.4):(0.2 to 0.6).

Sodium layered metal oxides formed with nickel, iron, and manganese at the aforementioned molar ratios exhibit high specific capacity and good stability.

In an embodiment, x=0.01 to 0.02 and y=0.01 to 0.02.

Doping with elements A and C under the aforementioned doping amount conditions effectively enhances the stability of the sodium layered metal oxide while minimally affecting its energy density.

In an embodiment, the sodium layered metal oxide has an O3-type crystal structure.

Sodium layered metal oxides with an O3-type crystal structure exhibit high specific capacity, making them highly suitable as positive electrode materials for sodium-ion batteries.

In some embodiments, a chemical formula of the sodium layered metal oxide is Na_{0.98}Ca_{0.02}Ni_{1/3}Fe_{0.31}Al_{0.02}Mn_{1/3}O₂.

The sodium layered metal oxide with the aforementioned chemical formula not only exhibits excellent structural stability but also high specific capacity and energy density, resulting in superior overall performance as a positive electrode active material.

According to a second aspect, an embodiment of this application provides a preparation method of the sodium layered metal oxide described above, including the following steps:
performing a first grinding treatment on a mixture containing a transition metal M source and a doping element C source, followed by a first calcination treatment to obtain an intermediate product; and
mixing the intermediate product with a sodium source and a doping element A source, performing a second grinding treatment, followed by a second calcination treatment to obtain the sodium layered metal oxide.

In the preparation process of the sodium layered metal oxide, doping with C at the transition metal M site is performed first, followed by doping with A at the sodium site, resulting in a sodium layered metal oxide doped at both the sodium and transition metal M sites. This preparation method is not only simple in process but also facilitates doping, yielding a sodium layered metal oxide with excellent stability.

In some embodiments, the preparation steps for the mixture containing the transition metal M source and the doping element C source include:
preparing an aqueous solution of the transition metal M source and an aqueous solution of the doping element C source separately;
adding a complexing agent to both the aqueous solution of the transition metal M source and the aqueous solution of the doping element C source to perform a complexation reaction, obtaining a first gel-like substance and a second gel-like substance, respectively; and
mixing and drying the first gel-like substance and the second gel-like substance to obtain the mixture.

By using a sol-gel method, uniform mixing of the transition metal M source and the doping element C source is achieved, facilitating uniform doping.

In some embodiments, one or more of the following conditions are satisfied:
(1) the complexing agent includes at least one of citric acid, oxalic acid, glutamic acid, polyvinyl alcohol, polyvinylidene fluoride, and polyacrylamide;
(2) a temperature of the complexation reaction is 40°C to 100°C; and
(3) a pH value of the complexation reaction is 7 to 11.

The aforementioned types of complexing agents and complexation reaction conditions enable the formation of gel-like substances from the transition metal M source and the doping element C source, respectively.

In some embodiments, the first calcination treatment includes: calcining at 800°C to 950°C for 6 h to 10 h, then cooling to 200°C to 600°C and calcining for 3 h to 6 h; and/or,
the second calcination treatment includes: calcining at 800°C to 950°C for 6 to 10 h, then cooling to 200°C to 600°C and calcining for 3 h to 6 h.

The aforementioned first calcination treatment conditions enable doping of the C element at the M site, while the second calcination treatment conditions enable doping of the A element at the sodium site.

In some embodiments, one or more of the following conditions are satisfied:
(1) the transition metal M source includes at least one of a soluble halide, acetate, carbonate, nitrate, sulfate, hydroxide, and oxide of M;
(2) the doping element C source includes at least one of a soluble halide, acetate, carbonate, nitrate, sulfate, hydroxide, and oxide of C;
(3) the doping element A source includes at least one of a soluble halide, acetate, carbonate, nitrate, sulfate, hydroxide, and oxide of A; and
(4) the sodium source includes at least one of sodium halide, sodium acetate, sodium carbonate, sodium nitrate, sodium sulfate, sodium hydroxide, and sodium oxide.

The aforementioned material types of the transition metal M source provide M elements, the material types of the doping element C source provides C elements, the material types of the doping element A source provides A elements, and the sodium salt provides sodium elements for the preparation of the sodium layered metal oxide.

According to a third aspect, an embodiment of this application provides a secondary battery, where a positive electrode plate of the secondary battery contains the sodium layered metal oxide provided by the first aspect of the embodiment of this application and/or the sodium layered metal oxide prepared by the preparation method provided by the second aspect of the embodiment of this application.

By using the sodium layered metal oxide provided by the first aspect of this application and/or prepared by the preparation method provided by the second aspect of this application as a positive electrode active material in the positive electrode plate of the secondary battery, the unique structural stability of the sodium layered metal oxide reduces the likelihood of particle cracking or detachment on the surface of the positive electrode active material layer, resulting in fewer side reactions on the surface, thereby reducing capacity fade and improving cycle performance and service life.

According to a fourth aspect, an embodiment of this application provides an electric apparatus, including the secondary battery provided by the third aspect of the embodiment of this application.

By adopting the secondary battery provided by the third aspect of this application, the electric apparatus can operate for a longer duration.

The above description is merely an overview of the technical solutions of this application. To facilitate a clearer understanding of the technical means of this application and enable implementation in accordance with the contents of the specification, and to make the above and other objectives, features, and advantages of this application more apparent, specific embodiments of this application are provided below.

### BRIEF DESCRIPTION OF DRAWINGS

By reading the detailed description of the preferred embodiments below, various other advantages and benefits will become clear to those skilled in the art. The drawings are provided solely for the purpose of illustrating the preferred embodiments and are not considered a limitation of this application. Throughout the drawings, identical components are denoted by identical reference numerals. In the accompanying drawings:
FIG. 1 is a schematic diagram illustrating a sodium layered metal oxide before and after doping according to an embodiment of this application;
FIG. 2 is a schematic flowchart of a preparation method of a sodium layered metal oxide according to an embodiment of this application;
FIG. 3 is a schematic structural diagram of an embodiment of a secondary battery according to an embodiment of this application;
FIG. 4 is an exploded schematic diagram of the secondary battery shown in FIG. 3;
FIG. 5 is a schematic structural diagram of an embodiment of a battery module according to an embodiment of this application;
FIG. 6 is a schematic structural diagram of an embodiment of a battery pack according to an embodiment of this application;
FIG. 7 is an exploded schematic structural diagram of the battery pack shown in FIG. 6;
FIG. 8 is a schematic diagram of an embodiment of an electric apparatus containing a battery as a power source according to an embodiment of this application;
FIG. 9 is an XRD curve graph of Na_{0.98}Ca_{0.02}Ni_{1/3}Fe_{0.31}Al_{0.02}Mn_{1/3}O₂ according to an embodiment of this application;
FIG. 10 is an XRD curve graph of NaNi_{1/3}Fe_{1/3}Mn_{1/3}O₂ according to a comparative example of this application;
FIG. 11 is an XRD curve graph of Na_{0.98}Ca_{0.02}Ni_{1/3}Fe_{1/3}Mn_{1/3}O₂ according to a comparative example of this application;
FIG. 12 is an XRD curve graph of NaNi_{1/3}Fe_{0.31}Al_{0.02}Mn_{1/3}O₂ according to a comparative example of this application.

Description of reference signs:
10, battery cell; 11, housing; 12, top cover assembly; 13, electrode assembly; 20, battery module; 30, battery pack; 31, upper box; and 32, lower box.

### DESCRIPTION OF EMBODIMENTS

The embodiments of the technical solutions of this application will be described in detail below in conjunction with the drawings. The following embodiments are merely intended to provide a clearer description of the technical solutions of this application and are used as examples, which do not constitute limitations on the protection scope of this application.

Unless otherwise defined, all technical and scientific terms used herein have the same meanings as commonly understood by those skilled in the technical field of this application. The terms used herein are solely for the purpose of describing specific embodiments and are not intended to limit this application. The terms "including" and "having" in the specification, claims, and descriptions of the drawings of this application, as well as any variations thereof, are intended to cover non-exclusive inclusion.

In the description of the embodiments of this application, technical terms such as "first" and "second" are used solely to distinguish different objects and should not be construed as indicating or implying relative importance or implying the quantity, specific order, or priority of the indicated technical features. In the description of the embodiments of this application, "plurality" means two or more, unless explicitly and specifically defined otherwise.

Reference to "embodiment" in this specification means that specific features, structures, or characteristics described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" is merely an associative relationship describing associated objects, indicating that three relationships may exist. For example, A and/or B may indicate the following three cases: presence of only A, presence of both A and B, and presence of only B. Additionally, the character "/" herein generally indicates an "or" relationship between the associated objects.

In the description of the embodiments of this application, the term "plurality" refers to two or more (including two), similarly, "multiple groups" refers to two or more groups (including two groups), and "multiple pieces" refers to two or more pieces (including two pieces). "At least one" refers to one or more (including one, two, three, and the like.).

In the description of the embodiments of this application, technical terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential" indicate orientations or positional relationships based on the orientations or positional relationships shown in the drawings. These terms are used solely for the convenience of describing the embodiments of this application and simplifying the description, and do not indicate or imply that the referred devices or elements must have a specific orientation, be constructed, or operate in a specific orientation, and thus should not be construed as limitations on the embodiments of this application.

In the description of the embodiments of this application, unless explicitly specified and limited otherwise, technical terms such as "install," "connect," "connection," and "fix" should be understood in a broad sense. For example, they may refer to a fixed connection, a detachable connection, or an integral formation; they may refer to a mechanical connection or an electrical connection; they may refer to a direct connection or an indirect connection through an intermediate medium, or an internal communication or interaction between two elements. Those skilled in the art can understand the specific meanings of the above terms in the embodiments of this application based on specific circumstances.

With the increasing scarcity of traditional energy resources, the development of new energy storage devices has gained significant attention. Among them, secondary batteries have attracted considerable interest due to their high energy density, high theoretical capacity, good cycle stability, and environmental friendliness. Secondary batteries are not only applied in energy storage systems for hydropower, thermal power, wind power, and solar power plants but are also widely used in electric vehicles such as electric bicycles, electric motorcycles, and electric cars, as well as in military equipment and aerospace fields. As the application areas of secondary batteries as power batteries continue to expand, their market demand is increasing, and the performance requirements, such as cycle performance, of the batteries are becoming more stringent.

Lithium-ion batteries, as a type of secondary battery, offer advantages such as high energy density, long service life, and environmental friendliness. However, due to global lithium resource constraints and rising costs, the use of lithium-ion batteries in large-scale energy storage faces challenges. Sodium-ion batteries, with their abundant sodium reserves on earth, low cost, and unique safety characteristics, have become significant candidates for large-scale energy storage systems. Therefore, developing sodium-ion batteries with no resource constraints and low cost holds greater potential for energy storage applications.

Sodium layered metal oxides, with their high specific capacity, high compacted density, and adjustable voltage range, can be used as positive electrode materials for sodium-ion batteries. However, sodium layered metal oxides suffer from structural instability, and during the cyclic charging and discharging of sodium-ion batteries, they are prone to phase transitions when used as positive electrode materials.

During the charging and discharging process of commonly used sodium layered metal oxides, the extraction of sodium ions during charging weakens interlayer interactions, increasing interlayer spacing. As the interlayer spacing increases, phase stability decreases, making layer sliding likely under thermodynamic driving forces. At the end of discharge, phase transitions may occur again, leading to stress accumulation and particle cracking in sodium layered metal oxide particles, thus reducing structural stability. Additionally, particle cracking exposes new surfaces, which may lead to side reactions such as surface oxygen loss phase transitions, solvent molecule oxidation, and transition metal dissolution, causing rapid battery capacity fade.

To address the structural instability of sodium layered metal oxides, related technologies have employed modifications, such as coating or doping, on sodium layered metal oxides. Surface coating modifications have limited effectiveness in fundamentally improving the internal structural phase transitions of sodium layered metal oxides and offer minimal suppression of layer sliding. Doping modifications often overlook the ionic radius parameters of sodium ions, typically using doping elements with ionic radii close to those of transition metals, which facilitates doping at the transition metal site. However, excessive doping of inactive elements at the transition metal site tends to reduce overall capacity. Additionally, doping low-valence elements at the sodium site makes phase transitions more likely in the desodiated state, leading to insufficient stability.

Based on the above considerations, to address the structural instability of sodium layered metal oxides, the embodiments of this application, through theoretical calculations and experimental studies, have designed a novel doped sodium layered metal oxide. By performing dual-site doping at the sodium site and the transition metal M site, the sodium layered metal oxide achieves improved stability, significantly enhancing its cycle performance and service life. Accordingly, the following technical solutions are proposed.

### Sodium Layered Metal Oxide

According to a first aspect, an embodiment of this application provides a sodium layered metal oxide. In an embodiment of this application, the sodium layered metal oxide has a general chemical formula of: Na₁₋ₓAₓC_{y}M_{1-y}O₂.

In Na₁₋ₓAₓC_{y}M_{1-y}O₂, M includes a transition metal element; A includes at least one of a Group IIA element, a Group V metal element, a Group VIA metal element, and a Group IIIB element, an ionic radius of A being greater than an ionic radius of M; C includes at least one of a third-period metal element, a fourth-period metal element, and a fifth-period metal element, a valence of C being less than or equal to a valence of M; and x=0.001 to 0.150 and y=0.001 to 0.500.

It should be noted that the elements at A, C, and M sites are distinct from each other. For example, if an element appears at the A site, it is not included in the C or M sites. In the embodiments of this application, the above chemical elements are classified according to the periodic table of elements (Periodic table of elements), which is a list of chemical elements arranged in order of increasing atomic number, as commonly known in the field. The periodic table consists of 7 periods and 16 groups. Each horizontal row is called a period, and each vertical column is called a group (Group VIII includes three columns).

By incorporating specific types of A elements and C elements into the sodium layered metal oxide, the sodium layered metal oxide achieves excellent stability, enhancing its cycle performance and service life.

In the general chemical formula Na₁₋ₓAₓC_{y}M_{1-y}O₂, A and C are doping elements, where A is a doping element at the sodium site, and C is a doping element for M.

Doping refers to modifying a material with doping elements by substituting at the positions of the doping sites with the doping elements, generally altering the lattice constant or valence state of elements in the material to improve its performance. In the embodiments of this application, doping elements are used to substitute at the sodium site and the transition metal M site for modification.

The doping element A satisfies: (1) an ionic radius greater than that of the transition metal M; (2) a valence after doping greater than that of sodium ions (that is, +1). When such a doping element A is doped at the sodium site of the sodium layered metal oxide, the high-valence doping element A forms a strong Coulombic interaction with oxygen atoms. When the sodium layered metal oxide is in the desodiated state, this strong Coulombic interaction suppresses interlayer sliding of the sodium layered metal oxide, reducing the likelihood of phase transitions and supporting the layered structure.

The doping element C satisfies: a valence after doping less than or equal to the valence of the transition metal M. Since the valence of the doping element A after doping is higher than that of sodium ions, doping the low-valence element C at the transition metal M site effectively balances the valence state, reducing lattice stress changes caused by valence variations due to A doping.

Therefore, the sodium layered metal oxide of the embodiments of this application, through doping with element A at the sodium site and element C at the transition metal M site, achieves excellent stability through dual-site doping, resulting in superior cycle performance and service life.

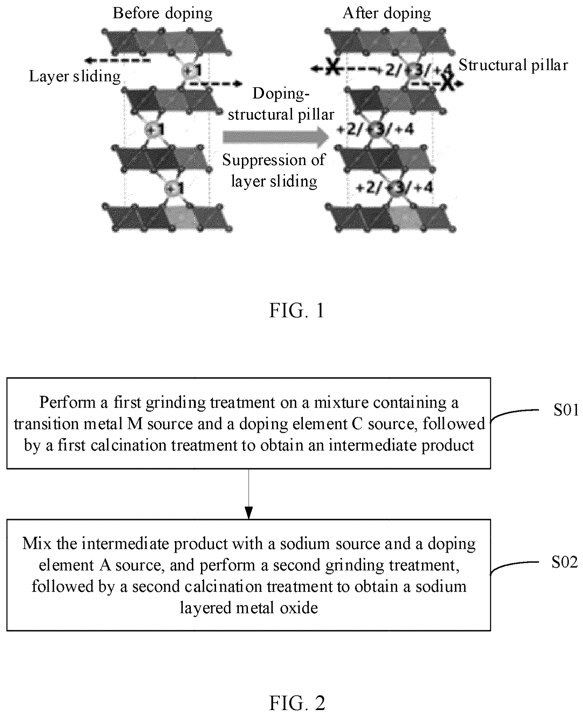

In some embodiments, the valence of the doping element A after doping ranges from +2 to +4, for example, +2, +3, or +4. As shown in FIG. 1, by doping the sodium layered metal oxide with a doping element A having a valence of +2 to +4, compared to sodium ions with a valence of +1, the stronger Coulombic interaction between the doping element A and oxygen atoms reduces the likelihood of layer sliding of the sodium layered metal oxide when in the desodiated state, providing an effective structural pillar role, thereby improving the crystal structure stability of the sodium layered metal oxide.

In some embodiments, in the doping element A, the Group IIA element includes at least one of calcium, strontium, and barium; the Group V metal element includes at least one of antimony and bismuth; the Group VIA metal element includes tellurium; the Group IIIB element includes at least one of yttrium, cerium, and lanthanum.

It should be noted that the metal elements in this application refer to elements with metallic properties, including metalloids such as tellurium that lie between metals and non-metals.

Specifically, the doping element A includes at least one of calcium (Ca), strontium (Sr), barium (Ba), antimony (Sb), bismuth (Bi), yttrium (Y), cerium (Ce), lanthanum (La), and tellurium (Te). Calcium, strontium, and barium can be doped with a valence of +2; antimony, bismuth, yttrium, and lanthanum can be doped with a valence of +3; and cerium and tellurium can be doped with a valence of +4. The ionic radii of calcium, strontium, barium, antimony, bismuth, yttrium, cerium, lanthanum, and tellurium are close to that of sodium ions, and their valences are higher than that of sodium ions. Therefore, these doping elements can be easily doped at the sodium site of the sodium layered metal oxide, and the strong Coulombic interaction with oxygen atoms suppresses interlayer sliding.

In some embodiments, the doping element A must include calcium. The ionic radius of calcium is closer to that of sodium ions, facilitating doping at the sodium site, and calcium doping reduces the risk of additional structural distortion caused by doping, further enhancing structural stability. Therefore, calcium not only facilitates doping at the sodium site but also improves the crystal structure stability of the sodium layered metal oxide.

In some embodiments, in the doping element C, the third-period metal element includes at least one of magnesium and aluminum; the fourth-period metal element includes at least one of zinc, gallium, and germanium; and the fifth-period metal element includes zirconium.

Specifically, the doping element C includes at least one of zirconium (Zr), magnesium (Mg), aluminum (Al), zinc (Zn), gallium (Ga), and germanium (Ge). The ionic radii of zirconium, magnesium, aluminum, zinc, gallium, and germanium are close to or smaller than that of the transition metal M, and their valences are less than or equal to that of the transition metal M. For example, when the transition metal M is trivalent iron or tetravalent manganese, the doping element can be magnesium, aluminum, zinc, and the like. These doping elements C can be easily doped at the M site while balancing the valence state, reducing changes in lattice stress due to significant local valence variations.

In some embodiments, the doping element C must include aluminum. Aluminum not only facilitates doping at the M site but also effectively balances the valence state.

In some embodiments, M includes at least two of nickel (Ni), manganese (Mn), copper (Cu), and iron (Fe). It should be noted that when M includes multiple elements, the valence of the doping element C after doping being less than or equal to the valence of the transition metal M refers to being less than or equal to the valence of at least one transition metal in M. A sodium layered metal oxide formed with multiple transition metals such as nickel, manganese, copper, and iron reduce the migration of transition metal ions in the transition metal layer. Combined with the C doping element at the sodium site, this configuration better suppresses phase transitions, enhancing electrochemical stability in the desodiated state.

In some embodiments, M includes nickel, iron, and manganese. With nickel, iron, and manganese forming the transition metal elements at the M site, the sodium layered metal oxide not only exhibits high specific capacity but also facilitates doping with the C element.

In an embodiment, a molar ratio of nickel, iron, and manganese in M is (0.2 to 0.4):(0.2 to 0.4):(0.2 to 0.6). For example, the molar ratio of nickel, iron, and manganese may be 0.2:0.2:0.6, 0.25:0.25:0.5, 0.3:0.3:0.4, or equal molar amounts. Sodium layered metal oxides formed with nickel, iron, and manganese at the aforementioned molar ratios exhibit high specific capacity and good stability.

In an embodiment of this application, in the general chemical formula Na₁₋ₓAₓC_{y}M_{1-y}O₂, x represents the doping amount of the doping element A, and y represents the doping amount of the doping element C, with x=0.001 to 0.150 and y=0.001 to 0.400. Exemplary but non-limiting values for x include 0.001, 0.005, 0.010, 0.015, 0.020, 0.030, 0.050, 0.080, 0.100, 0.120, and 0.150; exemplary but non-limiting values for x include 0.001, 0.005, 0.010, 0.015, 0.020, 0.030, 0.050, 0.080, 0.100, 0.120, 0.150, 0.200, 0.250, 0.350, 0.380, and 0.400. The values of x and y must maintain the electrical neutrality of the system. For example, assuming the valence of the doping element A is a, the valence of the doping element C is b, and the valence of the transition metal M is c, then (1-x)+ax+by+c(1-y)=4. After doping with the element A, valence balance can be maintained by varying the valence of the transition metal M.

Further, x=0.01 to 0.02 and y=0.01 to 0.02. Doping with elements A and C under the aforementioned doping amount conditions effectively enhances the stability of the sodium layered metal oxide while minimally affecting its energy density.

In an embodiment, the sodium layered metal oxide has an O3-type crystal structure.

Sodium layered metal oxides can have various structures, such as O3, P3, O'3, and P2 phases. The O and P represent octahedral (octahedral) and prismatic (prismatic) coordination structures of sodium ions, respectively. Sodium layered metal oxides with an O3-type structure exhibit high specific capacity, making them highly suitable as positive electrode materials for sodium-ion batteries.

In some embodiments, a chemical formula of the sodium layered metal oxide is Na_{0.98}Ca_{0.02}Ni_{1/3}Fe_{0.31}Al_{0.02}Mn_{1/3}O₂. After calcium doping, valence balance is maintained by varying the valence of the transition metal Mn, where the 0.02 valence increase due to calcium doping at the sodium site is offset by a 0.02 valence decrease in a portion of manganese. Specifically, in Na_{0.98}Ca_{0.02}Ni_{1/3}Fe_{0.31}Al_{0.02}Mn_{1/3}O₂, Na is +1, Ca is +2, Ni is +2, Fe is +3, Al is +3, approximately 0.02 mol of Mn atoms are changed to +3, and the remaining approximately 0.31 mol of Mn atoms are +4, with O being -2, ultimately maintaining electrical neutrality. The sodium layered metal oxide with the aforementioned chemical formula not only exhibits excellent structural stability but also high specific capacity and energy density, resulting in superior overall performance as a positive electrode active material.

### Preparation Method of Sodium Layered Metal Oxide

According to a second aspect, an embodiment of this application provides a preparation method of a sodium layered metal oxide, specifically a sodium layered metal oxide with the general chemical formula Na₁₋ₓAₓC_{y}M_{1-y}O₂. As shown in FIG. 2, the preparation method of the sodium layered metal oxide includes the following steps:
S01: Perform a first grinding treatment on a mixture containing a transition metal M source and a doping element C source, followed by a first calcination treatment to obtain an intermediate product; and
S02: Mix the intermediate product with a sodium source and a doping element A source, perform a second grinding treatment, followed by a second calcination treatment to obtain the sodium layered metal oxide.

In the preparation process of the sodium layered metal oxide in the embodiment of this application, doping with C at the transition metal M site is performed first, followed by doping with A at the sodium site, resulting in a sodium layered metal oxide doped at both the sodium and transition metal M sites. Since the preparation method of the sodium layered metal oxide in the embodiment of this application aims to prepare a sodium layered metal oxide with the general chemical formula Na₁₋ₓAₓC_{y}M_{1-y}O₂, the grinding and calcination processes are designed to dope the C and A elements at the transition metal M site and sodium site, respectively. The preparation method in embodiments of this application not only facilitates doping but is also simple in process, yielding a sodium layered metal oxide with excellent stability.

### Step S01:

The transition metal M source can be understood as a soluble compound capable of providing a source of the doping element M. Specifically, the transition metal M source includes at least one of a soluble halide, acetate, carbonate, nitrate, sulfate, hydroxide, and oxide of M. For example, with iron as the transition metal M, the iron source may be iron halide, iron acetate, iron carbonate, iron nitrate, iron sulfate, and the like. Other transition metal elements follow similarly, with corresponding soluble compounds of M capable of being prepared into a solution. The aforementioned material types of the transition metal M source effectively provide M elements for the preparation of the sodium layered metal oxide.

The doping element C source can be understood as a compound capable of providing a source of the doping element C. Specifically, the doping element C source includes at least one of a soluble halide, acetate, carbonate, nitrate, sulfate, hydroxide, and oxide of C. For example, with zinc as the doping element C, the zinc source may be zinc halide, zinc acetate, zinc carbonate, zinc nitrate, zinc sulfate, and the like. Other doping elements C follow similarly, with corresponding soluble compounds of C capable of being prepared into a solution. The aforementioned material types of the doping element C source effectively provide C elements for the preparation of the sodium layered metal oxide.

In some embodiments, the preparation steps for the mixture containing the transition metal M source and the doping element C source include:
S011: Prepare a solution of the transition metal M source and a solution of the doping element C source separately;
S012: Add a complexing agent to both the solution of the transition metal M source and the solution of the doping element C source to perform a complexation reaction, obtaining a first gel-like substance and a second gel-like substance, respectively; and
S013: Mix and dry the first gel-like substance and the second gel-like substance to obtain the mixture.

In the embodiment of this application, by adopting a sol-gel method, the transition metal M source and the doping element C source are separately prepared into solutions and complexed with a complexing agent to form gel-like substances. Mixing the M source and C source in a gel state facilitates uniform doping.

In step S011: The solution of the transition metal M source can be prepared by dissolving the transition metal M source in water at a certain ratio, with an M concentration of 0.2 mol/L to 0.8 mol/L. The solution of the doping element C source can be prepared by dissolving the doping element C source in water at a certain ratio, with a C concentration of 0.2 mol/L to 2 mol/L.

In step S012: Add a complexing agent to the solution of the transition metal M source, control the reaction temperature and pH value, and obtain a first gel-like substance through a complexation reaction. Add a complexing agent to the solution of the doping element C source, control the reaction temperature and pH value, and obtain a second gel-like substance through a complexation reaction.

In some embodiments, the complexing agent is an organic complexing agent, including at least one of citric acid, oxalic acid, glutamic acid, polyvinyl alcohol, polyvinylidene fluoride, and polyacrylamide. The complexing agent may be added by mixing a complexing agent solution with the solution of the transition metal M source or the solution of the doping element C source.

In some embodiments, the conditions of the complexation reaction include: a temperature of 40°C to 100°C, with exemplary but non-limiting temperatures such as 45°C, 50°C, 60°C, 70°C, and 80°C; a pH value of 7 to 11, with exemplary but non-limiting pH values such as 7.0, 7.5, 8, 9, 10, and 11.

Through the selection of the aforementioned complexing agent types and complexation reaction conditions, the complexation reaction can proceed gently, enabling the transition metal M source and the doping element C source to form a first gel-like substance and a second gel-like substance, respectively. Subsequently, the first and second gel-like substances are mixed and dried to obtain the mixture, facilitating the subsequent doping process.

In step S013: Drying is primarily to remove the solvent from the gel-like substances. The drying temperature may be 100°C to 120°C, under which conditions the quality and stability of the mixture are minimally affected. After drying to obtain the mixture, the first grinding treatment and the first calcination treatment are performed sequentially to obtain an intermediate product, which can be understood as a transition metal hydroxide modified by doping in the transition metal layer.

In some embodiments, the first grinding may be a ball milling process.

In some embodiments, the first calcination treatment includes two stages:
(1) calcining at 800°C to 950°C for 6 h to 10 h, with exemplary but non-limiting temperatures such as 800°C, 850°C, 900°C, 920°C, and 940°C, and exemplary but non-limiting times such as 6 h, 8 h, 9 h, and 10 h; (2) then cooling to 200°C to 600°C and calcining for 3 h to 6 h, with exemplary but non-limiting temperatures such as 200°C, 250°C, 300°C, 400°C, and 500°C, and exemplary but non-limiting times such as 3 h, 4 h, 5 h, and 6 h. Through the aforementioned first calcination treatment conditions of high-temperature long-duration calcination followed by lower-temperature short-duration calcination, doping of the C element at the M site is effectively achieved.

### Step S02:

By mixing the intermediate product obtained in step S01 with a sodium source and a doping element A source, performing a second grinding treatment, and then performing a second calcination treatment, the target product, a sodium layered metal oxide, is obtained.

In the step of mixing the intermediate product with the sodium source and the doping element A source, the sodium source and the doping element A source may also be separately prepared into solutions, followed by adding a complexing agent to form gel-like substances through a complexation reaction. The gel-like substances of the sodium source and the A source are dried before being mixed with the intermediate product. This sol-gel method facilitates uniform doping.

The doping element A source can be understood as a soluble compound capable of providing a source of the doping element A. Specifically, the doping element A source includes at least one of a soluble halide, acetate, carbonate, nitrate, sulfate, hydroxide, and oxide of A. For example, with calcium as the doping element A, the calcium source may be calcium halide, calcium acetate, calcium nitrate, and the like. Other doping elements follow similarly, with corresponding soluble compounds of A capable of being prepared into a solution. The aforementioned material types of the doping element A source effectively provide A elements for the preparation of the sodium layered metal oxide. The sodium source includes at least one of sodium halide, sodium acetate, sodium carbonate, sodium nitrate, sodium sulfate, sodium hydroxide, and sodium oxide. The aforementioned material types of the sodium source effectively provide sodium elements for the preparation of the sodium layered metal oxide.

In some embodiments, the second grinding may be a ball milling process.

In some embodiments, the second calcination treatment includes two stages: (1) calcining at 800°C to 950°C for 6 to 10 h, with exemplary but non-limiting temperatures such as 800°C, 850°C, 900°C, 920°C, and 940°C, and exemplary but non-limiting times such as 6 h, 8 h, 9 h, and 10 h; (2) then cooling to 200°C to 600°C and calcining for 3 to 6 h, with exemplary but non-limiting temperatures such as 200°C, 250°C, 300°C, 400°C, and 500°C, and exemplary but non-limiting times such as 3 h, 4 h, 5 h, and 6 h. Through the aforementioned first calcination treatment conditions of high-temperature long-duration calcination followed by lower-temperature short-duration calcination, doping of the A element at the sodium site is effectively achieved.

### Secondary Battery

According to a third aspect, an embodiment of this application provides a secondary battery, where a positive electrode plate of the secondary battery contains the sodium layered metal oxide provided by the first aspect of the embodiment of this application and/or the sodium layered metal oxide prepared by the preparation method provided by the second aspect of the embodiment of this application.

By using the sodium layered metal oxide with the general chemical formula Na₁₋ₓAₓC_{y}M_{1-y}O₂ provided by the embodiment of this application as a positive electrode active material in the positive electrode plate of the secondary battery, the unique structural stability of the sodium layered metal oxide reduces the likelihood of particle cracking or detachment on the surface of the positive electrode active material layer, resulting in fewer side reactions on the surface, thereby reducing capacity fade and improving cycle performance and service life.

In an embodiment, the positive electrode plate in the secondary battery provided by the embodiment of this application includes: (1) a current collector; (2) a positive electrode active material layer, the positive electrode active material layer being bonded to the current collector. The positive electrode active material layer contains a positive electrode active material, where the positive electrode active material is the sodium layered metal oxide provided by the first aspect of the embodiment of this application and/or the sodium layered metal oxide prepared by the preparation method provided by the second aspect of the embodiment of this application.

The positive electrode active material layer in the embodiment of this application refers to an active layer contained in the positive electrode plate, which is at least a layer structure containing the positive electrode material and is bonded to the current collector. By using the sodium layered metal oxide provided by the first aspect of this application and/or prepared by the preparation method provided by the second aspect of this application as the positive electrode active material in the positive electrode plate, the unique structural stability of the sodium layered metal oxide reduces the likelihood of particle cracking or detachment on the surface of the positive electrode active material layer, resulting in fewer side reactions on the surface, thereby reducing capacity fade and improving cycle performance and service life.

In an embodiment, the positive electrode active material layer may be bonded to at least one surface of the current collector.

In some embodiments, the current collector of the positive electrode plate, also referred to as the positive electrode current collector, may be a metal foil or a composite current collector. For example, as a metal foil, aluminum foil may be used. The composite current collector may include a polymer material substrate and a metal layer formed on at least one surface of the polymer material substrate. The composite current collector may be formed by depositing a metal material (such as aluminum, aluminum alloy, nickel, nickel alloy, titanium, titanium alloy, silver, or silver alloy) on a polymer material substrate such as polypropylene (PP), polyethylene terephthalate (PET), polybutylene terephthalate (PBT), polystyrene (PS), or polyethylene (PE).

In some embodiments, the positive electrode active material layer may optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoridehexafluoropropylene-tetrafluoroethylene terpolymer, tetrafluoroethylenehexafluoropropylene copolymer, and fluorinated acrylate resin.

In some embodiments, the positive electrode active material layer may optionally include a conductive agent. For example, the conductive agent may include at least one of superconducting carbon, acetylene black, carbon black, Ketjen black, carbon dots, carbon nanotubes, graphene, and carbon nanofibers.

In an exemplary embodiment, the secondary battery of the embodiment of this application includes a positive electrode plate, a separator, and a negative electrode plate. That is, the positive electrode plate of the secondary battery contains the sodium layered metal oxide with the general chemical formula Na₁₋ₓAₓC_{y}M_{1-y}O₂ provided by the embodiment of this application. Thus, the secondary battery of the embodiment of this application exhibits good cycle stability, low capacity fade during cycling, and significantly improved cycle performance.

Typically, a secondary battery includes a positive electrode plate, a negative electrode plate, an electrolyte, and a separator. During battery charging and discharging, active ions intercalate and deintercalate between the positive electrode plate and the negative electrode plate. The electrolyte conducts ions between the positive electrode plate and the negative electrode plate. The separator is disposed between the positive electrode plate and the negative electrode plate, primarily to prevent short-circuiting between the positive and negative electrodes while allowing ion passage.

In some embodiments, the electrolyte conducts ions between the positive electrode plate and the negative electrode plate. The embodiment of this application does not specifically limit the type of electrolyte, which can be selected based on requirements. For example, the electrolyte may be liquid, gel, or fully solid.

In some embodiments, the secondary battery of the embodiment of this application may include any one of a battery cell, a battery module, or a battery pack.

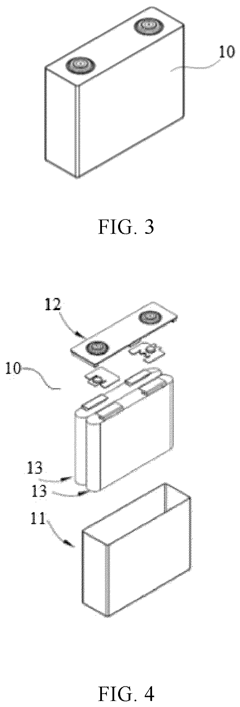

A battery cell refers to a unit including a battery housing and an electrode assembly encapsulated within the battery housing. The shape of the battery cell is not particularly limited and may be cylindrical, prismatic, or any other shape. FIG. 3 shows a battery cell 10 with a prismatic structure as an example.

In some embodiments, as shown in FIG. 4, the outer packaging of the battery cell 10 may include a housing 11 and a top cover assembly 12. The housing 11 may include a bottom plate and side plates connected to the bottom plate, with the bottom plate and side plates enclosing an accommodating cavity. The housing 11 has an opening communicating with the accommodating cavity, and the top cover assembly 12 is used to cover the opening to seal the accommodating cavity. The positive electrode, separator, and negative electrode plate contained in the secondary battery of the embodiment of this application may be formed into an electrode assembly 13 through a winding process and/or a lamination process. The electrode assembly 13 is packaged in the accommodating cavity. The electrolyte infiltrates the electrode assembly 13. The number of electrode assemblies 13 contained in the battery cell 10 may be one or more, adjustable based on actual needs.

The preparation method of the battery cell 10 is well-known. In some embodiments, the positive electrode, separator, negative electrode plate, and electrolyte may be assembled to form the battery cell 10. For example, the positive electrode, separator, and negative electrode plate may be formed into an electrode assembly 13 through a winding process or a lamination process. The electrode assembly 13 is placed in the outer packaging, dried, and then injected with the electrolyte, followed by processes such as vacuum sealing, standing, formation, and shaping to obtain the battery cell 10.

A battery module refers to an assembly of the battery cells 10, meaning it may contain multiple battery cells 10, with the specific number adjustable based on the application and capacity of the battery module.

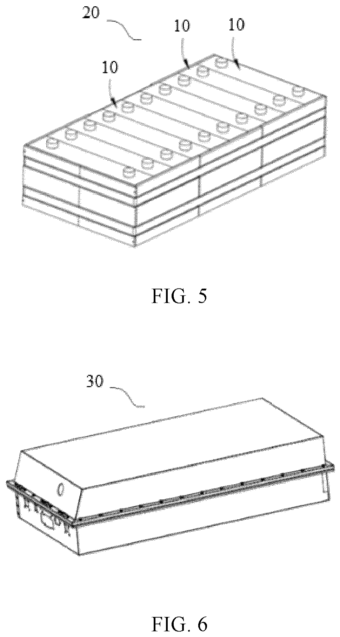

In some embodiments, FIG. 5 is a schematic diagram of a battery module 20 as an example. As shown in FIG. 5, in the battery module 20, a plurality of battery cells 10 may be sequentially arranged along the length direction of the battery module 20. Alternatively, the battery cells may be arranged in any other manner. Further, the plurality of battery cells 10 may be fastened through fasteners. Optionally, the battery module 20 may further include a shell with an accommodating space, and the plurality of battery cells 10 are accommodated in the accommodating space.

A battery pack refers to an assembly of the battery cells 10, meaning it may contain multiple battery cells 10, where multiple battery cells 10 may be assembled into the battery module 20 described above. The specific number of battery cells 10 or battery modules 20 contained in the battery pack can be adjusted based on the application and capacity of the battery pack.

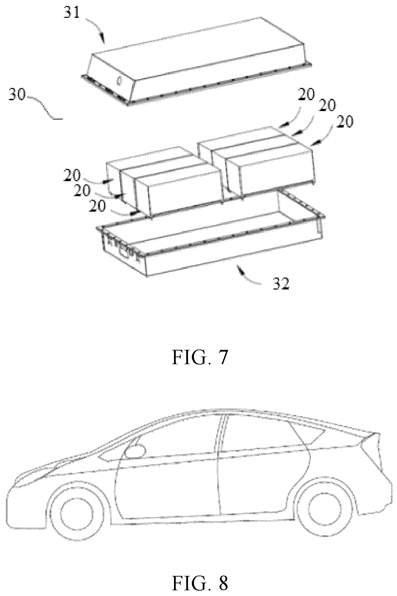

In some embodiments, FIG. 6 and FIG. 7 are schematic diagrams of a battery pack 30 as an example. The battery pack 30 may include a battery box and a plurality of battery modules 20 arranged in the battery box. The battery box includes an upper box 31 and a lower box 32, where the upper box 31 is used to cover the lower box 32, forming a sealed space for accommodating the battery modules 20. The plurality of battery modules 20 may be arranged in the battery box in any manner.

### Electric Apparatus

According to a fourth aspect, an embodiment of this application also provides an electric apparatus, including the secondary battery provided by the embodiment of this application. The secondary battery may be used as a power source for the electric apparatus or as an energy storage unit for the electric apparatus. Therefore, the electric apparatus of the embodiment of this application has a long standby or operating duration.

The electric apparatus may be, but is not limited to, a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, or an energy storage system. The electric apparatus may select a secondary battery, battery module, or battery pack based on its usage requirements.

FIG. 8 is a schematic diagram of an electric apparatus as an example. The electric apparatus may be a battery electric vehicle, a hybrid electric vehicle, a plug-in hybrid electric vehicle, or the like. To meet the requirements of the electric apparatus for high power and high energy density, a battery pack or a battery module may be used.

In another example, the electric apparatus may be a mobile phone, a tablet computer, a notebook computer, or the like. Such electric apparatuses typically require thin and lightweight designs and may use a secondary battery as a power source.

### Examples

The following describes examples of this application. The embodiments described below are exemplary and are intended only to explain this application, not to be construed as limiting this application. For embodiments where specific techniques or conditions are not specified, the techniques or conditions described in the literature in the field or product specifications are followed. The reagents or instruments used are conventional commercially available products if no manufacturer is indicated.

### 1. Examples of sodium layered metal oxide and preparation method thereof

### Example A1

A sodium layered metal oxide with a chemical formula of Na_{0.98}Ca_{0.02}Ni_{1/3}Fe_{0.31}Al_{0.02}Mn_{1/3}O₂. The preparation method of the sodium layered metal oxide includes the following steps:

### S11: Preparation of intermediate product:

Solution preparation: Nickel nitrate, iron nitrate, and manganese nitrate were dissolved in water according to the molar ratio of the chemical formula to obtain a transition metal salt solution with a total transition metal M concentration of approximately 0.5 mol/L. Aluminum nitrate was dissolved in water to obtain an aluminum salt solution with a concentration of 2 mol/L. Citric acid was dissolved in water to obtain a complexing agent solution with a concentration of 0.5 mol/L.

The transition metal salt solution and the complexing agent solution were mixed, with the temperature controlled at 50°C and pH=8, until a first gel-like substance was obtained. The aluminum salt solution and the complexing agent solution were mixed, with the temperature controlled at 50°C and pH=8, until a second gel-like substance was obtained.

The first gel-like substance and the second gel-like substance were mixed and dried at 110°C for 10 minutes, followed by a first ball milling for 30 minutes. After ball milling, calcination was performed: calcining at 800°C for 6 h, then at 250°C for 3 h, to obtain an intermediate product (that is, a transition metal hydroxide modified by doping in the transition metal layer).

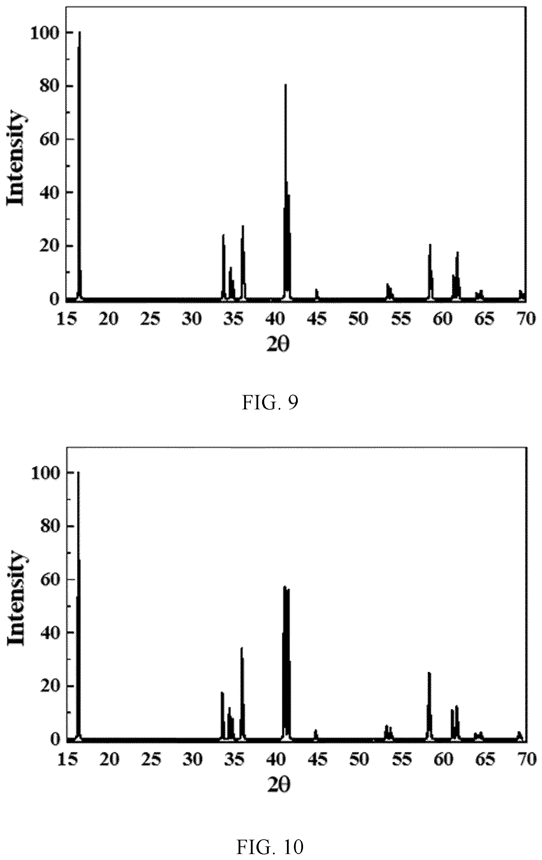

S12: The intermediate product was mixed with sodium nitrate and calcium nitrate according to the stoichiometric ratio of the chemical formula, followed by a second ball milling for 30 minutes. After ball milling, calcination was performed: calcining at 800°C for 6 h, then at 250°C for 3 h, to obtain the sodium layered metal oxide with the aforementioned chemical formula. FIG. 9 shows the characterized XRD pattern.

### Example A2

A sodium layered metal oxide with a chemical formula of Na_{0.98}Bi_{0.02}Ni_{1/3}Fe_{0.31}Al_{0.02}Mn_{1/3}O₂. The preparation method of the sodium layered metal oxide differs from Example A1 in the corresponding raw materials and amounts, with the rest being substantially the same.

### Example A3

A sodium layered metal oxide with a chemical formula of Na_{0.98}Ca_{0.02}Ni_{1/3}Fe_{0.31}Mg_{0.02}Mn_{1/3}O₂. The preparation method of the sodium layered metal oxide differs from Example A1 in the corresponding raw materials and amounts, with the rest being substantially the same.

### Example A4

A sodium layered metal oxide with a chemical formula of Na_{0.98}Ca_{0.02}Ni_{1/3}Fe_{0.31}W_{0.02}Mn_{1/3}O₂. The preparation method of the sodium layered metal oxide differs from Example A1 in the corresponding raw materials and amounts, with the rest being substantially the same.

### Example A5

A sodium layered metal oxide with a chemical formula of Na_{0.97}Ca_{0.03}Ni_{1/3}Fe_{0.31}Al_{0.02}Mn_{1/3}O₂. The preparation method of the sodium layered metal oxide differs from Example A1 in the corresponding raw materials and amounts, with the rest being substantially the same.

### Example A6

A sodium layered metal oxide with a chemical formula of Na_{0.96}Ca_{0.04}Ni_{1/3}Fe_{0.31}Al_{0.02}Mn_{1/3}O₂. The preparation method of the sodium layered metal oxide differs from Example A1 in the corresponding raw materials and amounts, with the rest being substantially the same.

### Comparative Example A1

A sodium layered metal oxide with a chemical formula of NaNi_{1/3}Fe_{1/3}Mn_{1/3}O₂. The preparation method of the sodium layered metal oxide differs from Example A1 in the corresponding raw materials and amounts, with the rest being substantially the same. FIG. 10 shows the characterized XRD pattern.

### Comparative Example A2

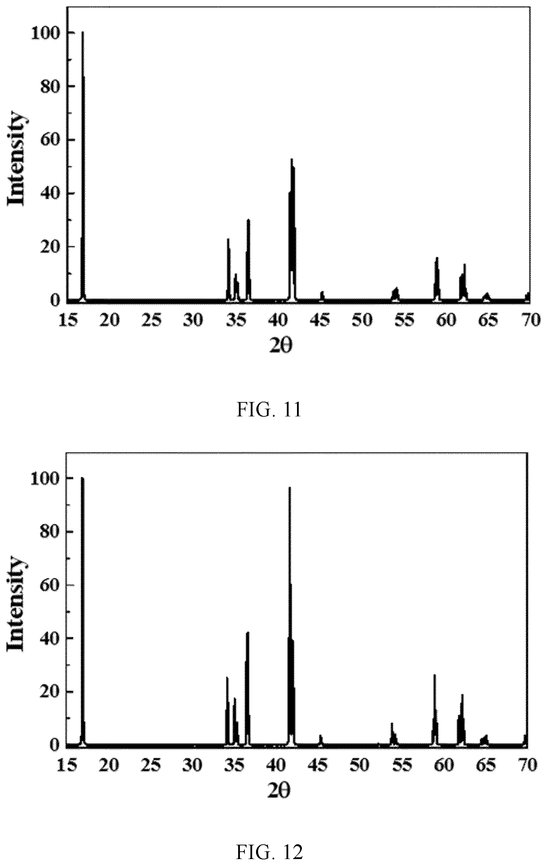

A sodium layered metal oxide with a chemical formula of Na_{0.98}Ca_{0.02}Ni_{1/3}Fe_{1/3}Mn_{1/3}O₂. The preparation method of the sodium layered metal oxide differs from Example A1 in the corresponding raw materials and amounts, with the rest being substantially the same. FIG. 11 shows the characterized XRD pattern.

### Comparative Example A3

A sodium layered metal oxide with a chemical formula of NaNi_{1/3}Fe_{0.31}Al_{0.02}Mn_{1/3}O₂. The preparation method of the sodium layered metal oxide differs from Example A1 in the corresponding raw materials and amounts, with the rest being substantially the same. FIG. 12 shows the characterized XRD pattern.

### Comparative Example A4

A sodium layered metal oxide with a chemical formula of Na_{0.98}Li_{0.02}Ni_{1/3}Fe_{0.31}Al_{0.02}Mn_{1/3}O₂. The preparation method of the sodium layered metal oxide differs from Example A1 in the corresponding raw materials and amounts, with the rest being substantially the same.

### Comparative Example A5

A sodium layered metal oxide with a chemical formula of Na_{0.8}Ca_{0.2}Ni_{1/3}Fe_{0.31}Al_{0.02}Mn_{1/3}O₂. The preparation method of the sodium layered metal oxide differs from Example A1 in the corresponding raw materials and amounts, with the rest being substantially the same.

### 2. Examples of secondary battery cells

### Examples B1 to B6 and Comparative Examples B1 to B5:

Examples B1 to B6 and Comparative Examples B1 to B5 each provide a secondary battery cell, where each secondary battery cell includes an electrode assembly formed by a positive electrode plate, a separator, and a negative electrode plate, as well as an electrolyte. The positive electrode active materials in the positive electrode plates of Examples B1 to B6 and Comparative Examples B1 to B5 correspond to the sodium layered metal oxides provided by Examples A1 to A6 and Comparative Examples A1 to A5, respectively. For example, the sodium layered metal oxide in Example A1 is used as the positive electrode active material in the electrode assembly of secondary battery Example B1, the sodium layered metal oxide in Example A2 is used as the positive electrode active material in the electrode assembly of secondary battery Example B2, and so forth, with the sodium layered metal oxide in Comparative Example A5 used as the positive electrode active material in the electrode assembly of secondary battery Comparative Example B5.

The positive electrode plate was prepared as follows:
Using N-methylpyrrolidone (NMP) as a solvent, a sodium layered metal oxide, a conductive agent (carbon nanotubes), and a binder (PVDF) were mixed at a mass ratio of 8:1:1 to form a positive electrode slurry. The positive electrode slurry was uniformly coated on aluminum foil with double-sided coating, where the areal density of each side was 0.25 mg/mm². After thorough vacuum drying, cold pressing, and slitting, the positive electrode plate was obtained.

Negative electrode plate: Metallic sodium was used as the counter electrode, that is, the negative electrode plate.

Electrolyte: At room temperature, ethylene carbonate (EC) and diethyl carbonate (DEC) were mixed at a volume ratio of 1:1. NaPF₆ was added to the mixed solution to obtain a solution with a concentration of 1 mol/L as the electrolyte.

Secondary battery assembly: In a low-humidity constant-temperature room, in an argon atmosphere glovebox, the positive electrode plate and negative electrode plate prepared as above were stacked in the order of "positive electrode-separator-negative electrode," filled with the electrolyte, and assembled into a coin cell.

### Performance test

### (1) Material characterization

By comparing the XRD curve graph of the sodium layered metal oxide in Example A1 (FIG. 9), the XRD curve graph of the sodium layered metal oxide in Comparative Example A1 (FIG. 10), the XRD curve graph of the sodium layered metal oxide in Comparative Example A2 (FIG. 11), and the XRD curve graph of the sodium layered metal oxide in Comparative Example A3 (FIG. 12), it was determined that Example A1 in this application achieved doping with calcium and aluminum.

### (2) Battery charge-discharge test

The secondary battery cells of Examples B1 to B6 and Comparative Examples B1 to B5 were tested separately.

The charge-discharge test conditions were: a test temperature of 45°C, a charge-discharge rate of 0.1 C, and charge-discharge cut-off voltages of 2.0 to 4.2 V (vs. Na+/Na), with 300 cycles. Test results are shown in Table 1.

**Table 1**

| Embodiment | Chemical formula of positive electrode active material | First charge (mAh/g) | First discharge (mAh/g) | Capacity retention rate after 300 cycles (%) |
|---|---|---|---|---|
| Example B1 | Na_{0.98}Ca_{0.02}Ni_{1/3}Fe_{0.31}Al_{0.02}Mn_{1/3}O₂ | 138 | 136 | 91 |
| Example B2 | Na_{0.98}Bi_{0.02}Ni_{1/3}Fe_{0.31}Al_{0.02}Mn_{1/3}O₂ | 137.7 | 135 | 89.3 |
| Example B3 | Na_{0.98}Ca_{0.02}Ni_{1/3}Fe_{0.31}Mg_{0.02}Mn_{1/3}O₂ | 136.5 | 134 | 89.2 |
| Example B4 | Na_{0.98}Ca_{0.02}Ni_{1/3}Fe_{0.31}W_{0.02}Mn_{1/3}O₂ | 137 | 135.3 | 88.5 |
| Example B5 | Na_{0.97}Ca_{0.03}Ni_{1/3}Fe_{0.31}Al_{0.02}Mn_{1/3}O₂ | 136.3 | 134.2 | 90.4 |
| Example B6 | Na_{0.96}Ca_{0.04}Ni_{1/3}Fe_{0.31}Al_{0.02}Mn_{1/3}O₂ | 134 | 130.7 | 89 |
| Comparative Example B1 | NaNi_{1/3}Fe_{0.31}Mn_{1/3}O₂ | 139.3 | 135.6 | 84.7 |
| Comparative Example B2 | Na_{0.98}Ca_{0.02}Ni_{1/3}Fe_{1/3}Mn_{1/3}O₂ | 137.1 | 135.3 | 88 |
| Comparative Example B3 | NaNi_{1/3}Fe_{0.31}Al_{0.02}Mn_{1/3}O₂ | 139 | 136.4 | 86 |
| Comparative Example B4 | Na_{0.98}Li_{0.02}Ni_{1/3}Fe_{0.31}Al_{0.02}Mn_{1/3}O₂ | 137.3 | 134 | 75 |
| Comparative Example B5 | Na_{0.8}Ca_{0.2}Ni_{1/3}Fe_{0.31}Al_{0.02}Mn_{1/3}O₂ | 125 | 122 | 77 |

From the test results in Table 1, it is evident that:
Compared to the undoped or single-site-doped sodium layered metal oxides in the comparative examples, the embodiments of this application, through co-doping at the sodium site and the transition metal M site, effectively enhance the cycle performance of secondary batteries, with minimal impact on the first charge capacity due to low doping amounts. From Examples B1, B5, B6, and Comparative Example B5, it can be observed that excessive calcium doping to 2% significantly affects the cycle performance and capacity of the secondary battery. When the calcium doping concentration is adjusted from 4% to 2%, the corresponding secondary battery capacity increases, and the capacity retention rate after cycling also improves, indicating that a calcium doping concentration of 2% yields optimal results.

Finally, it should be noted that the above embodiments are only used to illustrate the technical solutions of this application and not to limit them. Although this application has been described in detail with reference to the foregoing embodiments, those skilled in the art should understand that modifications can still be made to the technical solutions described in the foregoing embodiments, or equivalent replacements can be made to some or all of the technical features. Such modifications or replacements do not cause the essence of the corresponding technical solutions to depart from the scope of the technical solutions of the embodiments of this application and should be encompassed within the scope of the claims and specification of this application. In particular, as long as there is no structural conflict, the technical features mentioned in each embodiment can be combined in any manner. This application is not limited to the specific embodiments disclosed in this specification but includes all technical solutions falling within the scope of the claims.

## Claims

1. A sodium layered metal oxide, **characterized in that** the sodium layered metal oxide has a general chemical formula of: Na₁₋ₓAₓC_{y}M_{1-y}O₂; wherein
M comprises a transition metal element;
A comprises at least one of a Group IIA element, a Group V metal element, a Group VIA metal element, and a Group IIIB element, an ionic radius of A being greater than an ionic radius of M;
C comprises at least one of a third-period metal element, a fourth-period metal element, and a fifth-period metal element, a valence of C being less than or equal to a valence of M; and
x=0.001 to 0.150 and y=0.001 to 0.500.

2. The sodium layered metal oxide according to claim 1, **characterized in that** A is a doping element at the sodium site, and C is a doping element for M.

3. The sodium layered metal oxide according to claim 1 or 2, **characterized in that** a valence of A ranges from +2 to +4.

4. The sodium layered metal oxide according to any one of claims 1 to 3, **characterized in that** in A, the Group IIA element comprises at least one of calcium, strontium, and barium; the Group V metal element comprises at least one of antimony and bismuth; the Group VIA metal element comprises tellurium; and the Group IIIB element comprises at least one of yttrium, cerium, and lanthanum; or,
A comprises calcium.

5. The sodium layered metal oxide according to any one of claims 1 to 4, **characterized in that** in C, the third-period metal element comprises at least one of magnesium and aluminum; the fourth-period metal element comprises at least one of zinc, gallium, and germanium; and the fifth-period metal element comprises zirconium; or,
C comprises aluminum.

6. The sodium layered metal oxide according to any one of claims 1 to 5, **characterized in that** M comprises at least two of nickel, manganese, copper, and iron; or,
M comprises nickel, iron, and manganese.

7. The sodium layered metal oxide according to claim 6, **characterized in that** a molar ratio of nickel, iron, and manganese in M is (0.2 to 0.4):(0.2 to 0.4):(0.2 to 0.6).

8. The sodium layered metal oxide according to any one of claims 1 to 7, **characterized in that** x=0.01 to 0.02 and y=0.01 to 0.02.

9. The sodium layered metal oxide according to any one of claims 1 to 8, **characterized in that** the sodium layered metal oxide has an O3-type crystal structure.

10. The sodium layered metal oxide according to any one of claims 1 to 9, **characterized in that** a chemical formula of the sodium layered metal oxide is Na_{0.98}Ca_{0.02}Ni_{1/3}Fe_{0.31}Al_{0.02}Mn_{1/3}O₂.

11. A preparation method of the sodium layered metal oxide according to any one of claims 1 to 10, **characterized by** comprising:
performing a first grinding treatment on a mixture containing a transition metal M source and a doping element C source, followed by a first calcination treatment to obtain an intermediate product; and
mixing the intermediate product with a sodium source and a doping element A source, performing a second grinding treatment, followed by a second calcination treatment to obtain the sodium layered metal oxide.

12. The preparation method according to claim 11, **characterized in that** preparing the mixture containing the transition metal M source and the doping element C source comprises:
preparing an aqueous solution of the transition metal M source and an aqueous solution of the doping element C source separately;
adding a complexing agent to both the aqueous solution of the transition metal M source and the aqueous solution of the doping element C source to perform a complexation reaction, obtaining a first gel-like substance and a second gel-like substance, respectively; and
mixing and drying the first gel-like substance and the second gel-like substance to obtain the mixture.

13. The preparation method according to claim 12, **characterized in that** one or more of the following conditions are satisfied:
(1) the complexing agent comprises at least one of citric acid, oxalic acid, glutamic acid, polyvinyl alcohol, polyvinylidene fluoride, and polyacrylamide;
(2) a temperature of the complexation reaction is 40°C to 100°C; and
(3) a pH value of the complexation reaction is 7 to 11.

14. The preparation method according to any one of claims 11 to 13, **characterized in that** the first calcination treatment comprises: calcining at 800°C to 950°C for 6 h to 10 h, then cooling to 200°C to 600°C and calcining for 3 h to 6 h; and/or,
the second calcination treatment comprises: calcining at 800°C to 950°C for 6 h to 10 h, then cooling to 200°C to 600°C and calcining for 3 h to 6 h.

15. The preparation method according to any one of claims 11 to 14, **characterized in that** one or more of the following conditions are satisfied:
(1) the transition metal M source comprises at least one of a soluble halide, acetate, carbonate, nitrate, sulfate, hydroxide, and oxide of M;
(2) the doping element C source comprises at least one of a soluble halide, acetate, carbonate, nitrate, sulfate, hydroxide, and oxide of C;
(3) the doping element A source comprises at least one of a soluble halide, acetate, carbonate, nitrate, sulfate, hydroxide, and oxide of A; and
(4) the sodium source comprises at least one of sodium halide, sodium acetate, sodium carbonate, sodium nitrate, sodium sulfate, sodium hydroxide, and sodium oxide.

16. A secondary battery, **characterized in that** a positive electrode plate of the secondary battery comprises the sodium layered metal oxide according to any one of claims 1 to 10 and/or the sodium layered metal oxide prepared by the preparation method according to any one of claims 11 to 15.

17. An electric apparatus, **characterized by** comprising the secondary battery according to claim 16.
